# EUROPEAN PATENT SPECIFICATION

(11) **EP 1 174 957 B1**
(45) Date of publication and mention of the grant of the patent: **24.01.2007**
(21) Application number: 01116962.0
(22) Date of filing: 11.07.2001
(51) Int. Cl.: H01R 13/635, G06K 13/08

(54) **Electrical card connector**
Elektrischer Kartenverbinder
Connecteur électrique pour carte

(30) Priority: 18.07.2000 JP 2000216847
(43) Date of publication of application: 23.01.2002
(73) Proprietor: HIROSE ELECTRIC CO., LTD., Shinagawa-ku Tokyo (JP)
(72) Inventor: Takayasu, Ryuichi, Shinangawa-ku, Tokyo (JP); Ozawa, Hiroshi, Shinangawa-ku, Tokyo (JP)
(74) Representative: Pätzold, Herbert

(56) References cited:
- EP-A- 0 964 357
- PATENT ABSTRACTS OF JAPAN vol. 1999, no. 10, 31 August 1999 (1999-08-31) & JP 11 135192 A (HOSIDEN CORP), 21 May 1999 (1999-05-21)

## Description

The present invention relates to card connectors for connecting a card to a circuit board and, particularly, to a card connector for holding a card for a mobile device

Document EP-A-0 964 357 discloses a data card having an engaging recess and a connector having a locking lever for engaging the recess.

Japanese patent application Kokai No. 11-135192 discloses such a card connector as described above. This card connector comprises a body, a slider pushed into the body along with a card, a spring provided between the slider and the body, and a cam mechanism made up of a cam member and a pin member. The cam mechanism locks the slider. The card is inserted/removed by the "push-push operation" or pushing an edge of the card.

However, the push-push type connector requires a play space in the card insertion direction, increasing the depth of the connector against miniaturization trends. Tn addition, the sliding length between the card contact and the connector contact is so large that the life of the contacts is cut short. Furthermore, the edge of a card must be protruded from the mobile device so that the card can be damaged or fall out of the connector when the mobile device drops.

To remove the card, it is necessary to apply to the card a pushing force that is greater than the force for insertion of the card, making the card removal difficult. The gripping power of a card is determined by the spring force of the lock mechanism so that it is necessary to replace the lock mechanism for adjusting the gripping power, requiring more labor and cost. The eject member and the lock mechanism are too complex to reduce the size of the device and the manufacturing cost.

Accordingly, it is an object of the invention to provide a card connector that allows miniaturization of the device, improvement in the operability, reduction in the manufacturing cost and the number of parts, and simplification of the structure.

The above object is achieved by the invention claimed in claims 1 and 7.

Embodiments of the invention will now be described by way of example with reference to the accompanying drawings, in which:
Fig. 1 is an exploded perspective view of a card connector according to an embodiment of the invention;
Fig. 2 is a perspective view of the card connector;
Fig. 3 is a perspective view of an eject plate for the card connector;
Fig. 4 is a perspective view of a push rod for the card connector;
Figs. 5-7 are perspective views of a lock mechanism for the card connector in action;
Figs. 8-10 are sectional views of the card connector in action;
Figs. 11-13 are perspective views of the card connector in action;
Fig. 14 is a perspective view of a lock mechanism according to another embodiment of the invention;
Fig. 15 is a perspective view of a card connector according to still another embodiment of the invention; and
Fig. 16 is a sectional view of part of a card connector according to yet another embodiment of the invention.

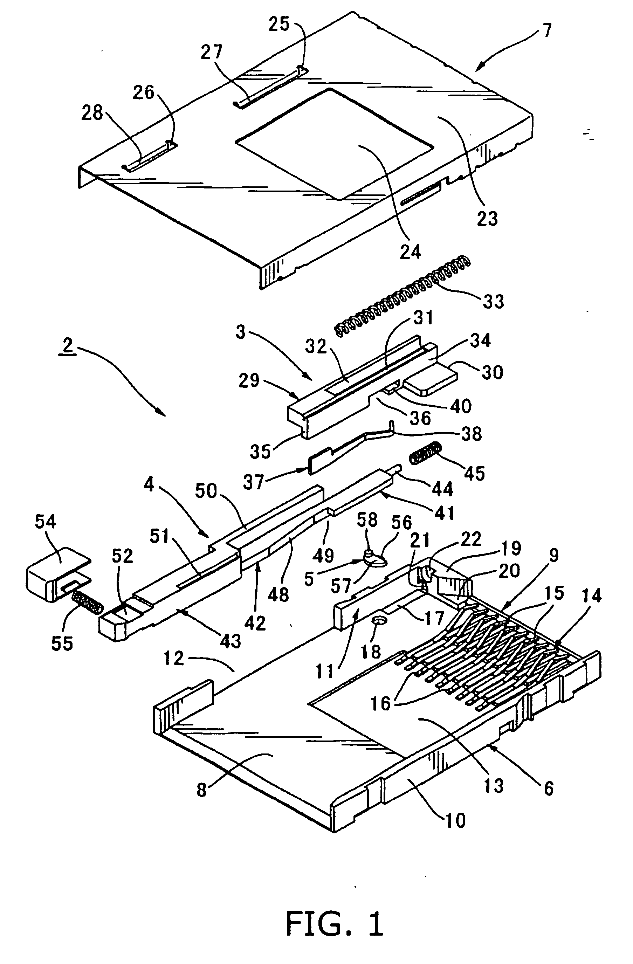

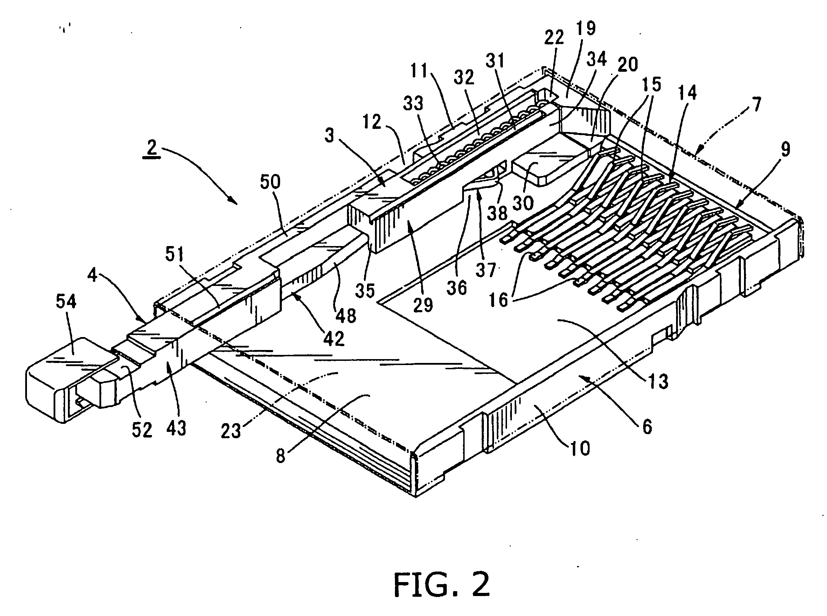

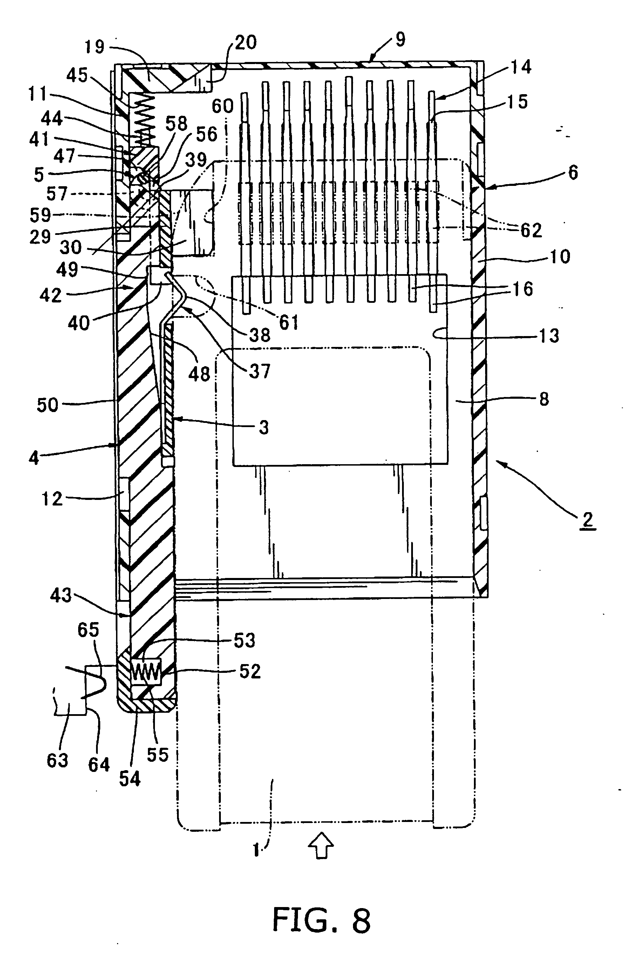

In Figs. 1 and 2, a card connector comprises a case 2 for receiving a removable card 1 (Figs. 8-10), an eject plate 3 provided in the case 2 for sliding along with the card 1, a push rod 4 provided outside the eject plate 3, and a cam member 5 provided between the push rod 4 and the case 2 for rotation.

The case 2 is made up of a case body 6 made of a synthetic resin, for example, and a case cover 7 made of a metal sheet to cover the case body 6. The case body 6 has a rectangular bottom plate 8, a rear wall 9, a right side wall 10, and a left side wall 11. A cut-out 12 is provided in the middle of the left side wall 11. The front edge of the bottom plate 8 is tapered and a rectangular opening 13 is provided in the middle of the bottom plate 8. Ten (10) terminals 14 are arranged in parallel on the bottom plate 8 behind the rectangular opening 13. The rear end of each terminal 14 is bent upwardly to provide a contact section 15 and the front end is bent downwardly through the rectangular opening 13 to provide a connection section 16. A first spring mounting groove 17 is provided in the bottom plate 8 at the left rear corner along the left side wall 11 and a circular hole 18 is provided in front of the first spring mounting groove 17. An abutting section 19 is provided at the left end of the rear wall 9 adjacent to the left side wall 11 and is made higher and thicker than the rest of the rear wall 9. An obliquely cut portion 20 is provided at the upper right corner of the abutting section 19. A first spring engaging recess 21 is provided in the left portion of the abutting section 19 corresponding to the first spring mounting groove 17 and a second spring engaging recess 22 is provided above the first spring engaging recess.

The case cover 7 has depending rear and side flanges and a top plate 23 with a rectangular opening 24 provided at a position corresponding to the bottom opening 13. The top and bottom openings 24 and 13 are used for connecting the connection sections 16 to a circuit board (not shown) and ventilating the heat that is generated during the connecting operation. First and second slits 25 and 26 are provided in the left portion of the top plate 23 aligned in a line in the card insertion/removal direction. A major edge of each slit 25 or 26 is bent downwardly to provide a first or second projection piece 27 or 28.

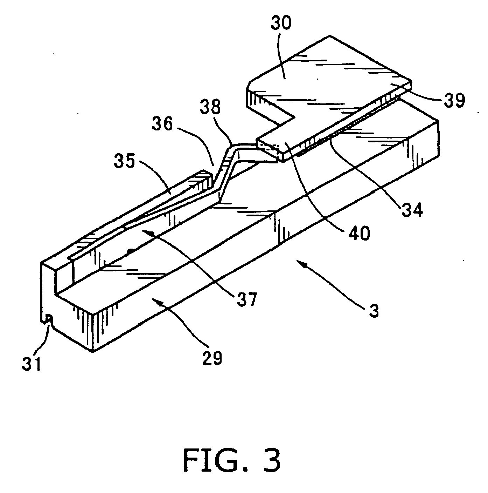

The eject plate 3 comprises a slide section 29 extending in the card insertion/removal direction and an engaging plate 30 provided on the rear side face of the slide section 29. A fine groove 31 and a second spring groove 32 are provided in the top of the slide section 29 to receive the first projection piece 27 and the second spring 33, respectively. Rear and front depending walls 34 and 35 are provided on the inner side of the slide section 29 with a gap 36 between them. A metallic engaging piece 37 is attached to the outer face of the front depending wall 35 such that a J-shaped engaging projection 38 lies beside the gap 36 and projects inwardly from an imagined line connecting the depending walls 34 and 35. As Fig. 3 shows, outer and front jaw sections 39 and 40 extend outwardly and forwardly, respectively, from the lower end of the rear depending wall 34 such that their lower faces are flush with the lower face of the engaging section 30.

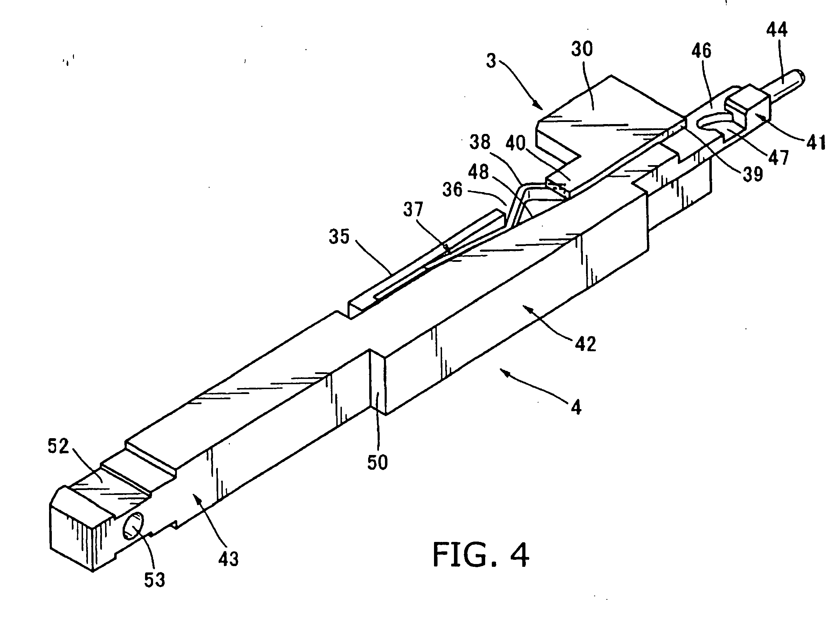

The push rod 4 comprises a rear plate 41 for sliding along the rear left side wall 11, an L-shaped central section 42 for sliding within the gap 12, and a front rectangular block 43 for sliding along the front left side wall 11 such that the eject plate 3 slides along the rear plate 41 and the central section 42. A round rod 44 extends rearwardly from the rear end of the rear plate 41 to engage a first spring 45. As Fig. 4 shows, a step-down portion 46 is provided on the rear section 41 and a guide groove 47 extends outwardly from the inner edge of the step-down portion 46.

The central section 42 has a sloping inner face 48 tapered toward the rear end and a cut-out portion 49 at its front end. An engaging wall 50 extends outwardly from the central section 42 beyond the rear and front sections 41 and 43 so that the front and rear faces thereof abut against the rear and front ends of the front and rear left side walls 11, respectively.

The front section 43 is protruded more inwardly than the rear and central sections 41 and 42 and a fine groove 51 extends forwardly from the rear end of the front section 43 to receive the second projecting piece 28. The front portion 52 of the front section 43 is made thinner than the other portion thereof and a circular recess 53 extends inwardly from the outer face thereof to receive a third spring 55 therein. A removable push button 54 is attached to the front portion 52 is biased outwardly by the third spring 55. As best shown in Fig. 8, a notch 64 is provided in the case 63, to which the card connector is attached, beside the push button 54 and a card detecting switch 65 is provided in the notch 64.

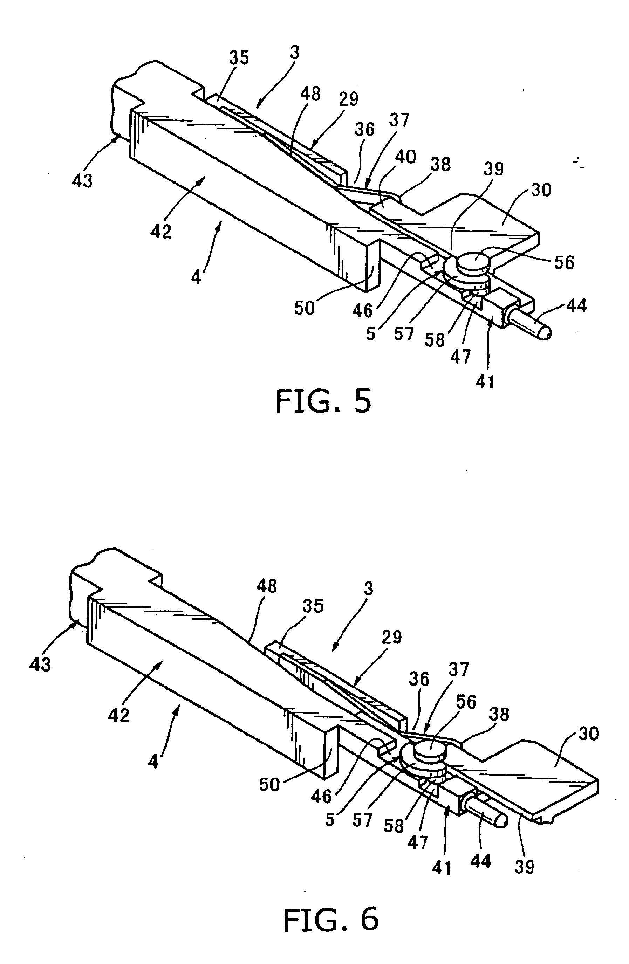

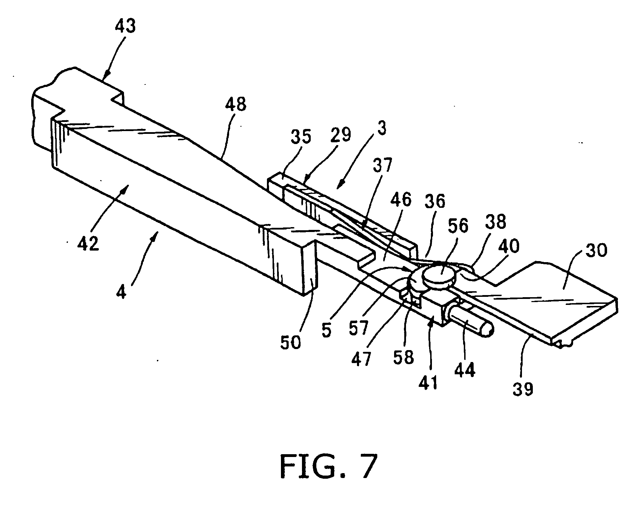

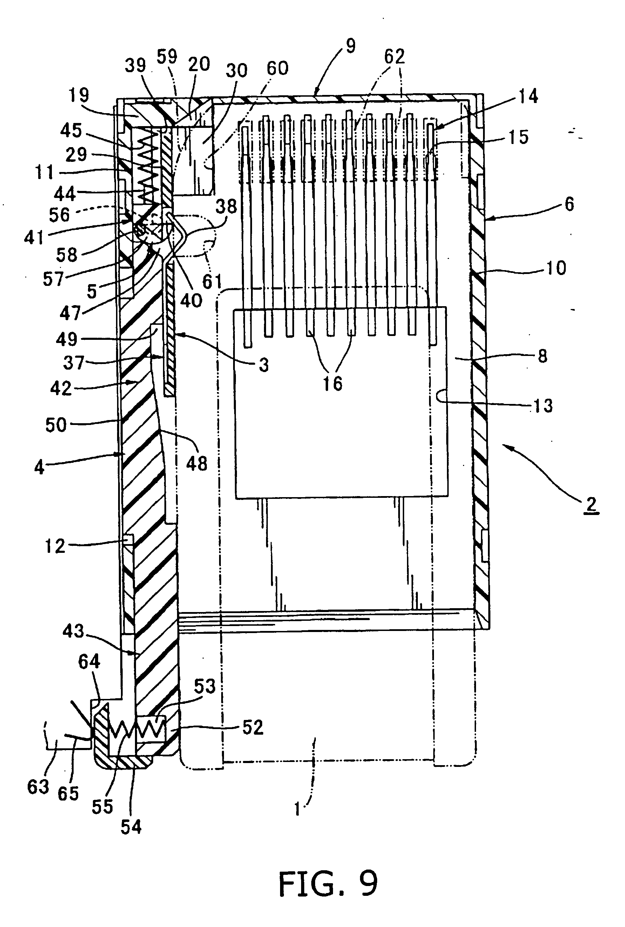

The cam member 5 comprises a short shaft 56 for engagement with the round hole 18, a semi-circular engaging plate 57, and a top column 58 eccentrically provided on the engaging plate 57 for engagement with the guide groove 47 such that, as Figs. 5-6, 8, and 10 show, the top column 58 is positioned more rearwardly than the axis of the short shaft 56 with the curved face of the engaging plate 57 facing outwardly and, as Figs. 7 and 9 show, it is positioned more outwardly than the axis of the short shaft 56 with the curved face of the engaging plate 57 facing forwardly.
That is, the top column 58 is positioned inwardly in the guiding groove 47 when the curved face of the engaging plate 57 faces outwardly and outwardly in the guiding groove 47 when the curved face of the engaging plate 57 faces forwardly.

The card 1 will be described below with reference to Figs. 8-10. The card 1 has a rectangular shape, with a rounded front left corner 59, and a first engaging recess 60 provided in the lower face of the front left corner 59. A second engaging recess 61 is provided in the lower face of the card 1 behind the first one, extending inwardly from the left edge of the card 1. A plurality of contact points 62 are provided on the front edge of the card 1 corresponding to the terminals 14.

The operation of the card connector will be described below with reference to Figs. 5-10. Before the card 1 is inserted in the case 2, the eject plate 3 is pushed forwardly by the second spring 33 so that the front end of the slide section 29 abuts on the rear face of the front section 43 of the push rod 4. As Figs 5 and 8 show, the engaging plate 57 of the cam member 5 is prevented by the outward jaw portion 39 from counterclockwise rotation to keep the curved face to face outwardly. That is, the top column 58 is positioned more forwardly than the axis of the short shaft 56, keeping the push rod 4 at such a position as shown in Fig. 8 and the push button 54 to engage the case 63, fitting over the front portion 52.

As Fig. 8 shows, when the card 1 is inserted into the case 2, the engaging projection 38 abuts on the left side of the card 1 and engages the second engaging recess 61 and the engaging section 30 engages the first engaging recess 60. During this time, the eject plate 3 and the push rod 4 keep the initial conditions. When the card 1 is further inserted into the case 2, the eject plate 3 is moved rearwardly along the push rod 4 along with the card 1 against the second spring 33.

As Figs. 7 and 9 show, when the front end of the card 1 abuts on the rear wall 9 and the rear end of the engaging section 30 abuts on the abutment section 19, the engaging plate 57 rotates counterclockwise and engages the front jaw portion 40. Consequently, the top column 58 is positioned more outwardly than the axis of the short shaft 56, the push rod 4 slides forwardly, and the push button 54 is released from the housing 63. The push button 54 is separated from the front portion 52 by the third spring 55 for contact with the card detecting switch 65, indicating that the card 1 now is held in the case 2. At this time, the leftward movement of the engaging plate 37 is restricted by the inner side face of the rear section 41 to lock the engagement between the engaging projection 38 and the second engaging recess 61.

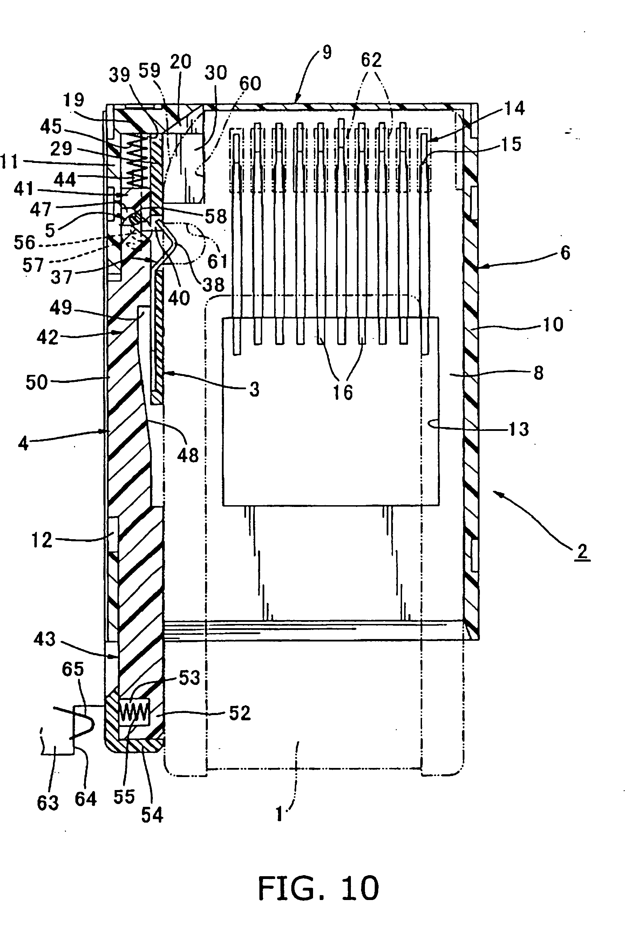

To eject the card 1 from the case 2, the push button 54 is depressed to the right against the third spring 55 to-fit over the front portion 52 and the push rod 4 pushed rearwardly. As Fig. 10 shows, the top column 58 is moved more rearwardly than the axis of the short shaft 56 and the engaging plate 57 rotates clockwise. Consequently, the curved face of the engaging plate 57 faces outwardly, releasing the engagement between the engaging plate 57 and the front jaw portion 40. As Fig. 8 shows, the eject plate 3 is moved forwardly together with the card 1 by the second spring 33 along the push rod 4 to the original position. Under this condition, the cut-out portion 49 is positioned on the left side of the engaging projection 38 so that when the card 1 is pulled, the engaging projection 38 is flexed toward the left, releasing the engagement between the engaging projection 38 and the second engaging recess 61 to facilitate the removal of the card 1.

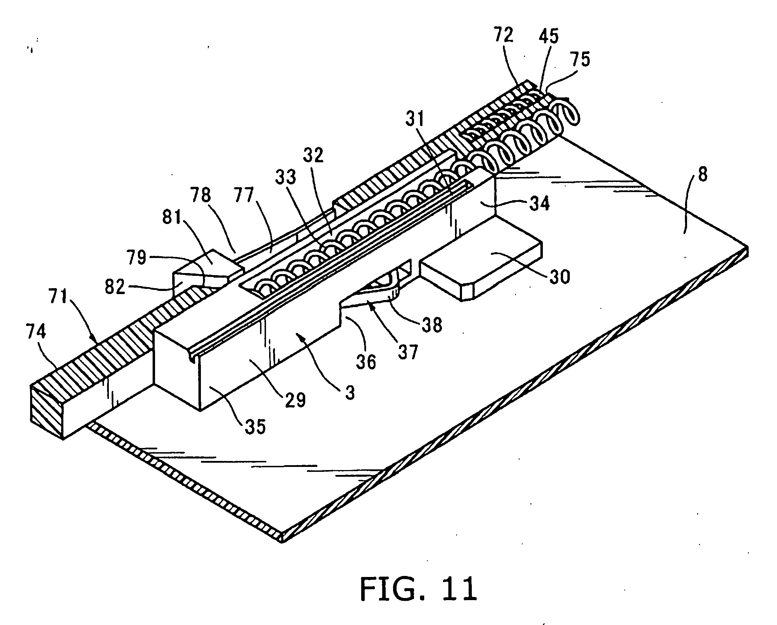

Another embodiment of the invention will be described below with reference to Figs. 11-14. The description on structure and operation similar to that of the above embodiment will be omitted. A push rod 71 is provided outside the ejector plate 3 and composed of a rectangular rear section 72 for sliding on the rear left side wall 11, a central section 73 for sliding in the gap 12, and a rectangular front section 74 for sliding on the front left side wall 11. A first spring mounting groove 75 extends forwardly from the rear end of the rear section 72 to receive a first spring 45 therein. An indented portion 76 is provided in the outside of the central section 73 and a leaf spring 77 extends forwardly from the rear end of the indented portion 76. Alternatively, the leaf spring 77 may extend from the case 1. A cut-out portion 78 is provided in the front portion of the central section 73 and a wide tapered face 79 is provided on the front end of the cut-out portion 78.

A guiding ridge 80 extends in the bottom plate 8 of the case body 6 in a direction perpendicular to the card insertion/removal direction and a cam member 81 for sliding along the guiding ridge 80 is biased inwardly by the leaf spring 77. The cam member 81 has a triangular shape and a sloping front face 82 that has the same slant angle as that of the tapered face 79.

The operation of this card connector will be described below with reference to Figs. 11-14. In Fig. 11, before the card is inserted into the case 2, the eject plate 3 is pressed to the front by the second spring 33 and the cam member 81 abuts on the outside of the slide section 29 so that its movement to the side is restricted.

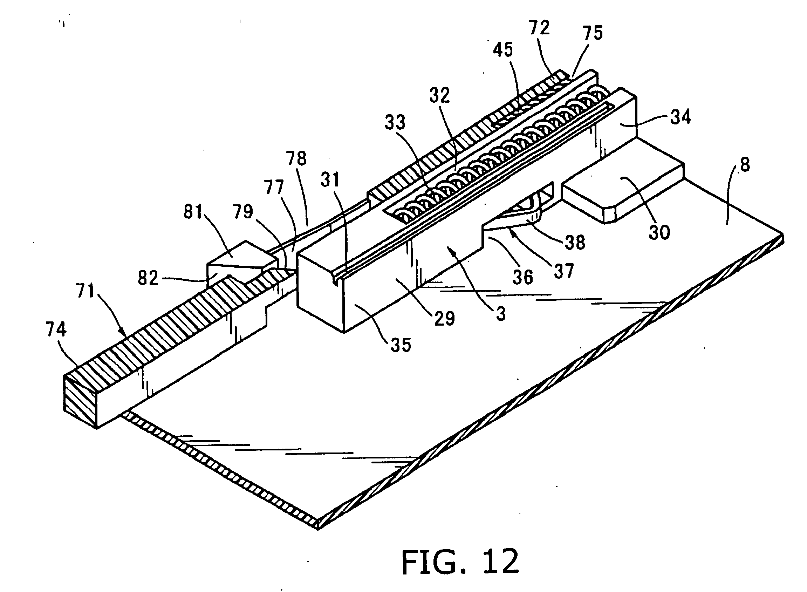

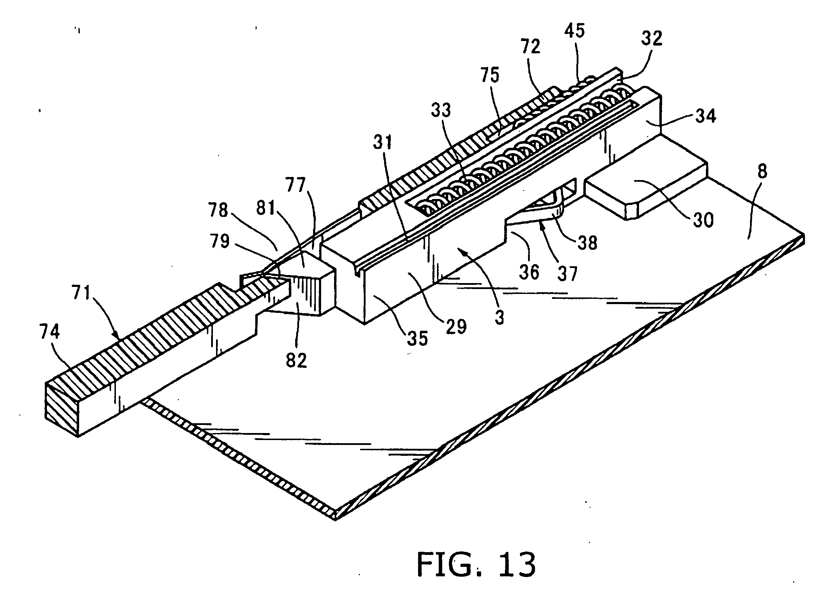

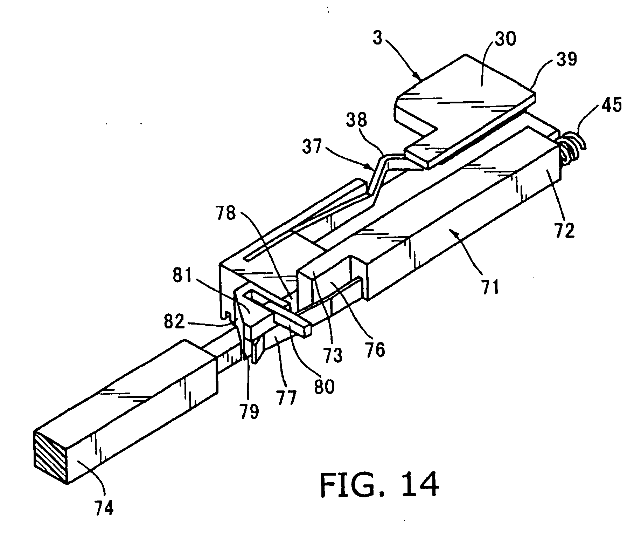

In Fig. 12, when the card is inserted into the case 2, the eject plate 3 is moved rearwardly along the push rod 4 against the second spring 33 together with the card. As Figs. 13 and 14 show, when the card is inserted to a predetermined position, the cam member 81 is moved inwardly along the guiding ridge 80 to engage the front end of the slide section 29 so that forward movement of the eject plate 3 is restricted.

To eject the card 1 from the case 2, the push rod 71 is depressed against the third spring 55. The tapered face 79 of the push rod 71 pushes the sloping face 82 of the cam member 81 outwardly against the leaf spring 77 along the guiding ridge 80 so that the engagement between the cam member 81 and the front end of the slide section 29 is released (Fig. 12). The eject plate 3 is moved forwardly together with the card 1 by the second spring 33 to the original position as shown in Fig. 11. When the card is pulled, the engaging projection 38 is flexed to the left so that the engagement between the engaging projection 38 and the second engaging recess 61 is released to eject the card.

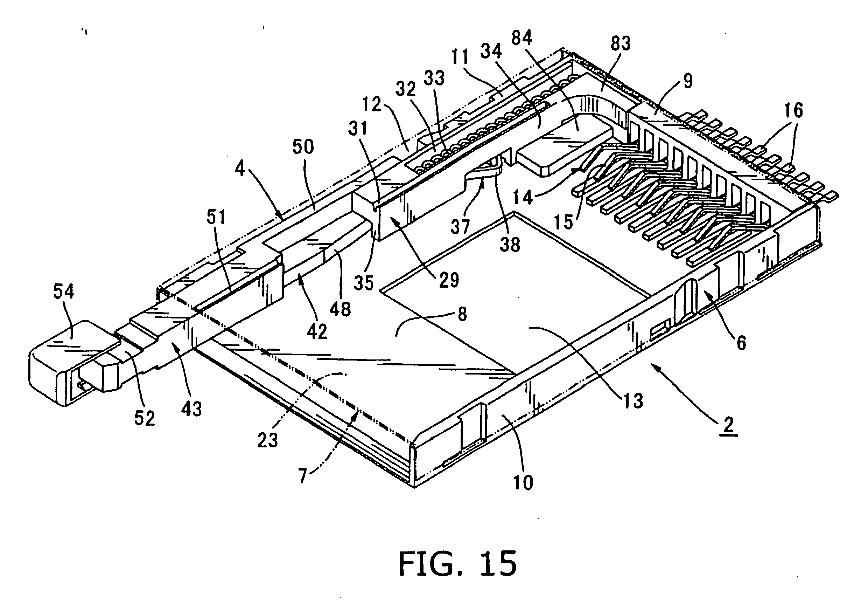

As Fig. 15 shows, the engaging plate 30 for engagement with the first engaging recess 60 of the card 1 is replaced by an abutting portion 83 on which the front end of the card 1 abuts. A wrong insertion preventive portion 84 is provided on the rear left corner of the bottom plate 8 to prevent the card 1 from being inserted into the case 2 upside down. The connection sections 16 of terminals 14 extend to the outside.

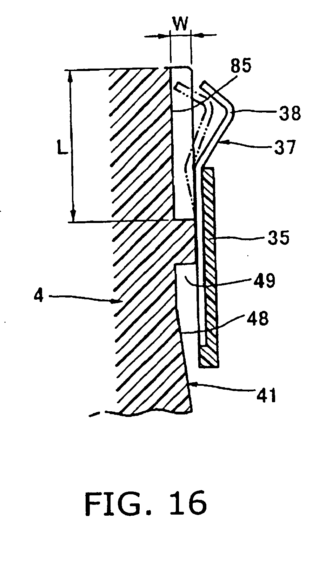

As Fig. 16 shows, a stepped portion 85 having a length of L and a depth of W is provided in the inside of the rear end portion 41 or 72 of the push rod 4 or 71. If a force is applied to the card 1 held in the case 2, the engaging member 37 is flexed to avoid damage to the connector. The amount of flexure of the engaging member 37 is adjusted by changing the length (L) and/or depth (W) of the stepped portion 85. The portion for restricting the outward movement of the engaging projection 38 and the stepped portion 85 may be provided on the case 2 instead of the push rod 4 or 71. The card connector according to the invention may be used for a variety of cards including an IC card that is mounted in a mobile device.

As has been described above, the card connector according to the invention requires no space for play that has been required for the push-push operation system. Since the card is locked by the cam member, it does not fall from the connector even if the mobile device is dropped. To remove the card, it is only necessary that the push rod is depressed lightly. Also, it is easy to adjust the force with which the card is held. The structure is simple and the number of parts is so small that the manufacturing cost is reduced.

## Claims

1. A card connector for electrically connecting to a circuit board a removable card (1) having an engaging recess (61) on a side thereof, comprising:
a case (2) for holding said removable card therein;
**characterized in that** it further comprises :
an eject plate (3) biased in a card removal direction for sliding together with said removable card;
an engaging member (57) provided on said eject plate and having an engaging projection (38) for engagement with said engaging recess;
a push rod (4) provided outside said eject plate and biased in said card removal direction and having a front portion (54) projecting from said case;
a cam member (5) biased to move, when said removable card is inserted into a predetermined position, toward said eject plate for engagement with said eject plate to lock said removable card at said predetermined position and, when said push rod is depressed, move away from said eject plate against said bias to release said eject plate from said engagement.

2. The card connector according to claim 1, wherein said cam member comprises an engaging plate for rotation between said case and said push rod and a top column eccentrically provided on said engaging member for engagement with said push rod such that when said removable card is inserted into said predetermined card, it is rotated outwardly while said engaging member is rotated to and engaged with said eject plate to lock said removable card at said predetermined position and, when said push rod is depressed, it is rotated inwardly while said engaging plate is rotated to the eject plate to release the eject plate from said engagement.

3. The card connector according to claim 1, which further comprises spring means for biasing said cam member to said eject plate so that when said removable card is inserted into said case at said predetermined position, said cam member slides to and engages with said eject plate to lock said card at said predetermined position and, when said push rod is depressed, said cam member slides away from said eject plate to release said engagement between said cam member and said eject plate.

4. The card connector according to one of claims 1-3, which further comprises a push button provided at a rear end of said push rod and biased outwardly so that when said card is not in said case, it is fitted over said rear end of said push rod and, when said card is held in said case, said push rod is moved in said card removal direction and said push button is separated from said rear end and brought into contact with a card detecting switch on a housing.

5. The card connector according to one of claims 1-4, wherein said push rod is provided with means for restricting outward movement of said engaging member with said removable card held in said case.

6. The card connector according to claim 5, wherein said means is provided with a stepped down portion having a size changed to adjust changes of said engaging member.

7. A card connector for electrically connecting a removable card (1) having an engaging recess (61) on a side thereof to a circuit board, comprising:
a case (2) for holding said removable card;
**characterized in that** it further comprises :
an eject plate (3) biased in a card removal direction for sliding together with said removable card;
an engaging member (57) provided on said eject plate so as to be laterally flexible and having an engaging projection (38) for engagement with said engaging recess of said removable card;
a push rod (4) provided outside said eject plate and biased in said card removal direction and having a front portion projecting from said case;
locking means (5) for locking, when said removable card is inserted into said predetermined position, said eject plate at said predetermined position to hold said removable card at said predetermined position and, when said push rod is depressed, move away from said eject plate to release said eject plate from said engagement, and
restricting means for restricting outward movement of said engaging member when said removable card is held at said predetermined position, said restricting means having a stepped portion changed so as to adjust flexure of said engaging member.

## Patentansprüche

1. Kartenverbinder zur elektrischen Verbindung einer Leiterplatte mit einer entfernbaren Karte (1) mit einer Ausnehmung (61) an einer Seite: einem Gehäuse (2) zum Halten der entfernbaren Karte in dem Gehäuse;
**dadurch gekennzeichnet, dass**
der Kartenverbinder außerdem umfasst:
eine Auswurfplatte (3) die federnd in einer Kartenentfernrichtung angeordnet ist um zusammen mit der entfernbaren Karte zu gleiten;
ein Verbindungselement (57) ist auf der Auswurfplatte vorgesehen und hat einen Verbindungsvorsprung (38) zur Verbindung mit der Verbindungsausnehmung;
ein Druckstab (4) ist außerhalb der Auswurfplatte und federnd in der Kartenentfernrichtung vorgesehen und hat einen vorderen Abschnitt (54), der aus dem Gehäuse herausragt;
ein Nockenelement (5) ist federnd beweglich, wenn die entfernbare Karte in eine vorbestimmte Position eingeführt ist, und zwar in Richtung der Auswurfplatte zur Verbindung mit der Auswurfplatte, um die entfernbare Karte an der vorbestimmten Position zu verriegeln und, wenn der Druckstab gedrückt wird, dann bewegt sich das Nockenelement (5) von der Auswurfplatte gegen die Federkraft fort, um die Auswurfplatte von der Verbindung zu lösen.

2. Kartenverbinder nach Anspruch 1, wobei das Nockenelement eine Verbindungsplatte zur Rotation zwischen dem Gehäuse und dem Druckstab umfasst, und ein Oberteil ist exzentrisch auf dem Verbindungselement vorgesehen zur Verbindung mit dem Druckstab, so dass wenn die entfernbare Karte auf vorbestimmte Weise eingeführt ist, dann rotiert sie nach außen, wobei das Verbindungselement rotiert und mit der Auswurfplatte verbindet, um die entfernbare Karte an der vorbestimmten Position zu verriegeln und wenn der Druckstab gedrückt wird, dann rotiert sie nach Innen, wobei die Verbindungsplatte zu der Auswurfplatte rotiert, um die Auswurfplatte von der Verbindung zu lösen.

3. Kartenverbinder nach Anspruch 1, der außerdem Federmittel umfasst, um das Nockenelement federnd an die Auswurfplatte zu drücken, so dass wenn die entfernbare Karte in das Gehäuse an die vorbestimmte Position eingeführt ist, dann gleitet das Nockenelement in Richtung der Auswurfplatte und verbindet sich mit der Auswurfplatte, um die Karte an der vorbestimmten Position zu verriegeln, und wenn der Druckstab gedrückt ist, dann gleitet das Nockenelement von der Auswurfplatte fort, um die Verbindung zwischen dem Nockenelement und der Auswurfplatte zu lösen.

4. Kartenverbinder nach einem der Ansprüche 1 bis 3, der außerdem einen Druckknopf umfasst, der an einem hinteren Ende des Druckstabs vorgesehen ist und nach außen federnd angeordnet ist, so dass wenn die Karte nicht in dem Gehäuse ist, dann ist er über dem hinteren Ende des Druckstabs angeordnet, und wenn die Karte in dem Gehäuse gehalten ist, dann ist der Druckstab in der Kartenentfernrichtung verschoben, wobei der Druckknopf von dem hinteren Ende getrennt ist und in Kontakt mit einem Kartendetektionsschalter auf einem Gehäuse gebracht ist.

5. Kartenverbinder nach einem der Ansprüche 1 bis 4, wobei der Druckstab Mittel zur Einschränkung der Bewegung nach Außen des Verbindungselements mit der entfernbaren Karte in dem Gehäuse umfasst.

6. Kartenverbinder nach Anspruch 5, wobei die Mittel einen abgestuften unteren Abschnitt umfassen deren Ausbildung verändert ist, um das Verbindungselement einzustellen.

7. Kartenverbinder zur elektrischen Verbindung einer entfernbaren Karte (1) mit einer Verbindungsausnehmung (61) an einer Seite mit einer Leiterplatte mit:
einem Gehäuse (2) zum Halten der entfernbaren Karte;
**dadurch gekennzeichnet, dass** der Kartenverbinder außerdem umfasst:
eine Auswurfplatte (3) die federnd in einer Kartenentfernrichtung angeordnet ist, so dass sie zusammen mit der entfernbaren Karte gleiten kann;
ein Verbindungselement (57) ist auf der Auswurfplatte lateral flexibel angeordnet und hat einen Verbindungsvorsprung (38) zur Verbindung mit einer Verbindungsausnehmung der entfernbaren Karte;
ein Druckstab (4) ist außerhalb der Auswurfplatte angeordnet und federnd in der Kartenentfernrichtung angeordnet und hat einen vorderen Abschnitt, der aus dem Gehäuse herausragt;
Verriegelungsmittel (5) zur Verriegelung der entfernbaren Karte, wenn sie in die vorbestimmte Position eingeführt ist, zur Verriegelung der entfernbaren Karte an der vorbestimmten Position, um die entfernbare Karte an der vorbestimmten Position zu halten, wobei wenn der Druckstab gedrückt ist, die Verriegelungsmittel von der Auswurfplatte getrennt werden, um die Auswurfplatte von der Verbindung zu lösen, und
Beschränkungsmittel zur Beschränkung der äußeren Bewegung des Verbindungselements, wenn die entfernbare Karte an der vorbestimmten Position gehalten ist, wobei die Beschränkungsmittel einen abgestuften veränderten Abschnitt haben, so dass die Biegung des Verbindungselements eingestellt ist.

## Revendications

1. Connecteur de carte pour connecter électriquement, à une plaquette de circuit, une carte amovible (1) ayant une encoche d'enclenchement (61) dans un côté, comprenant :
un boîtier (2) pour tenir la dite carte amovible à l'intérieur ;
**caractérisé en ce qu'**il comprend en outre :
une plaque d'éjection (3) sollicitée dans une direction d'enlèvement de la carte pour coulisser ensemble avec la dite carte amovible ;
un élément d'enclenchement (57) prévu sur la dite plaque d'éjection et ayant une saillie d'enclenchement (38) pour venir en prise avec la dite encoche d'enclenchement ;
une tige de poussoir (4) prévue à l'extérieur de la dite plaque d'éjection et sollicitée dans la dite direction d'enlèvement de la carte et ayant une partie avant (54) qui fait saillie par rapport au dit boîtier ;
un élément de came (5) sollicité de manière à se déplacer, lorsque la dite carte amovible est insérée dans une position prédéterminée, vers la dite plaque d'éjection pour venir en prise avec la dite plaque d'éjection afin de verrouiller la dite carte amovible à la dite position prédéterminée et, lorsque la dite tige de poussoir est enfoncée, s'éloigner de la dite plaque d'éjection contre la dite sollicitation pour libérer la dite plaque d'éjection du dit enclenchement.

2. Connecteur de carte selon la revendication 1, dans lequel le dit élément de came comprend une plaque d'enclenchement pour rotation entre le dit boîtier et la dite tige de poussoir et un bouton supérieur prévu de façon excentrée sur la dite plaque d'enclenchement pour venir en prise avec la dite tige de poussoir de sorte que, lorsque la dite carte amovible est insérée dans la dite position prédéterminée, il tourne vers l'extérieur tandis que le dit élément d'enclenchement tourne vers la dite plaque d'éjection et vient en prise avec celle-ci pour verrouiller la dite carte amovible à la dite position prédéterminée et, lorsque la dite tige de poussoir est enfoncée, il tourne vers l'intérieur tandis que la dite plaque d'enclenchement tourne vers la plaque d'éjection pour libérer la plaque d'éjection du dit enclenchement.

3. Connecteur de carte selon la revendication 1, qui comprend en outre un moyen à ressort pour rappeler le dit élément de came vers la dite plaque d'éjection de sorte que, lorsque la dite carte amovible est insérée dans le dit boîtier à la dite position prédéterminée, le dit élément de came glisse vers la dite plaque d'éjection et vient en contact avec celle-ci pour verrouiller la dite carte à la dite position prédéterminée et, lorsque la dite tige de poussoir est enfoncée, le dit élément de came glisse et s'éloigne de la dite plaque d'éjection pour libérer le dit enclenchement entre le dit élément de came et la dite plaque d'éjection.

4. Connecteur de carte selon une quelconque des revendications 1 à 3, qui comprend en outre un bouton-poussoir prévu à une extrémité arrière de la dite tige de poussoir et rappelé vers l'extérieur de sorte que, lorsque la dite carte n'est pas dans le dit boîtier, il est ajusté sur la dite extrémité arrière de la dite tige de poussoir et, lorsque la dite carte est retenue dans le dit boîtier, la dite tige de poussoir est déplacée dans la dite direction d'enlèvement de carte et le dit bouton-poussoir est séparé de la dite extrémité arrière et amené en contact avec un interrupteur de détection de carte sur un boîtier.

5. Connecteur de carte selon une des revendications 1 à 4, dans lequel la dite tige de poussoir comporte un moyen de limitation d'un mouvement vers l'extérieur du dit élément d'enclenchement avec la dite carte amovible maintenue dans le dit boîtier.

6. Connecteur de carte selon la revendication 5, dans lequel le dit moyen est prévu avec une partie abaissée ayant une dimension modifiée pour s'ajuster aux changements du dit élément d'enclenchement.

7. Connecteur de carte pour connecter électriquement une carte amovible, ayant une encoche d'enclenchement (61) sur son côté, à un panneau de circuit, comprenant :
un boîtier (2) pour maintenir la dite carte amovible à l'intérieur ;
**caractérisé en ce qu'**il comprend en outre :
une plaque d'éjection (3) rappelée dans une direction d'enlèvement de carte de manière à glisser ensemble avec la dite carte amovible,
un élément d'enclenchement (57) prévu sur la dite plaque d'éjection de façon à être latéralement flexible et ayant une saillie d'enclenchement (38) pour s'enclencher avec la dite encoche d'enclenchement de la dite carte amovible,
une tige de poussoir (4) prévue à l'extérieur de la dite plaque d'éjection et rappelée dans la dite direction d'enlèvement de carte et ayant une partie avant qui fait saillie par rapport au dit boîtier ;
un moyen de verrouillage (5) pour bloquer, lorsque la dite carte amovible est insérée dans la dite position prédéterminée, la dite plaque d'éjection à la dite position prédéterminée afin de maintenir la dite carte amovible à la dite position prédéterminée et, lorsque la dite tige de poussoir est enfoncée, s'éloigner de la dite plaque d'éjection pour libérer la dite plaque d'éjection du dit enclenchement, et
un moyen de limitation pour limiter le mouvement vers l'extérieur du dit élément d'enclenchement lorsque la dite carte amovible est maintenue à la dite position prédéterminée, le dit moyen de limitation ayant une partie épaulée modifiée afin d'ajuster la flexion du dit élément d'enclenchement.
